(19)

Europäisches Patentamt

European Patent Office

Office européen des brevets

(11) **EP 4 418 192 A1**

# EUROPEAN PATENT APPLICATION

published in accordance with Art. 153(4) EPC

(43) Date of publication:
**21.08.2024 Bulletin 2024/34**

(21) Application number: **22880603.0**

(22) Date of filing: **12.07.2022**

(51) International Patent Classification (IPC):
***G06Q 30/06*** *(2023.01)*

(52) Cooperative Patent Classification (CPC):
**G06Q 30/06**

(86) International application number:
**PCT/JP2022/027365**

(87) International publication number:
**WO 2023/062898 (20.04.2023 Gazette 2023/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.10.2021 JP 2021167336**

(71) Applicant: **Idemitsu Kosan Co.,Ltd.
Tokyo 100-8321 (JP)**

(72) Inventors:
• **KOBAYASHI, Soichi**
**Tokyo 100-8321 (JP)**
• **OISHI, Akira**
**Tokyo 100-8321 (JP)**
• **FUKUCHI, Taketora**
**Tokyo 100-8321 (JP)**

• **ABE, Yasushi**
**Tokyo 100-8321 (JP)**
• **TAKEZAWA, Masaaki**
**Tokyo 100-8321 (JP)**
• **AOYAGI, Yasushi**
**Tokyo 100-8321 (JP)**
• **ASAHI, Hiromitsu**
**Tokyo 100-8321 (JP)**
• **ICHIKAWA, Takehiro**
**Tokyo 100-8321 (JP)**
• **TAJIMA, Nobuhiro**
**Tokyo 174-0043 (JP)**
• **ASAI, Akihiko**
**Tokyo 165-0023 (JP)**

(74) Representative: **Hoffmann Eitle
Patent- und Rechtsanwälte PartmbB
Arabellastraße 30
81925 München (DE)**

(54) **INFORMATION PROCESSING DEVICE, PROGRAM, AND INFORMATION PROCESSING METHOD**

(57) To automatically execute determination of a lending type for reuse, provided is a server (100) for enabling determination of the lending type for a vehicle (500) returned from a user in a vehicle lending service for lending out a vehicle to the user, the server (100) including: first calculation means (113) for calculating, based on information (revenues and expenses) corresponding to a state value of a battery (506), a subscription profit to be gained when the returned vehicle (500) is lent out for subscription and a share profit to be gained when the returned vehicle (500) is lent out for car share; and determination means (117) for determining the subscription or the car share as the lending type for the returned vehicle (500) based on the subscription profit and the share profit that have been calculated.

EP 4 418 192 A1

**(Cont. next page)**

FIG. 15

```
        200                    100                    500
         |                      |                      |
  ┌──────────────┐      ┌──────────────┐      ┌──────────────┐
  │   BUSINESS   │      │              │      │              │
  │   OPERATOR   │      │    SERVER    │      │   VEHICLE    │
  │   TERMINAL   │      │              │      │              │
  └──────────────┘      └──────────────┘      └──────────────┘
         |                      |                      |
```

S101:
INPUT VEHICLE          VEHICLE INFORMATION
INFORMATION     ───────────────────────────►

                       S102:
                       REQUEST BATTERY
                       INFORMATION      ───────────────────────────►
                                          BATTERY INFORMATION
                                          (SUCH AS SOH)
                                      ◄───────────────────────────

                       S103:
                       CALCULATE BATTERY
                       USABLE PERIOD

                       S104:
                       CALCULATE EXPECTED
                       REVENUES OF SUBSCRIPTION
                       AND CAR SHARE

                       S105:
                       CALCULATE EXPECTED REUSE
                       COSTS FOR SUBSCRIPTION
                       AND CAR SHARE

                       S106:
                       DETERMINE LENDING TYPE
           LENDING TYPE INFORMATION    OF RETURNED VEHICLE
       ◄──────────────────────────────

S107:
DISPLAY
LENDING TYPE

**Description**

Technical Field

The present invention relates to an information processing device, a program, and an information processing method for performing determination relating to reuse of a returned vehicle in a service for lending out a vehicle.

Background Art

As services for lending out a vehicle to a user, there are known car lease (hereinafter also referred to as "lease"), subscription (hereinafter also referred to as "SB"), rental, and car sharing (hereinafter also referred to as "car share" or "CS").

For the sake of convenience of description, a vehicle to be lent out in the lease is referred to as "lease vehicle," a vehicle to be lent out in the subscription is referred to as "subscription vehicle" or "SB vehicle," a vehicle to be lent out in the rental is referred to as "rental car," and a vehicle to be lent out in the car share is referred to as "share car" or "CS vehicle."

In recent years, in this type of service, an electric vehicle (hereinafter referred to as "EV") using a battery as a drive source has been provided.

In regard to an in-vehicle battery, a method for reuse has been investigated.

For example, in Patent Literature 1, it is disclosed that a type of reuse of an in-vehicle battery is determined and reported by diagnosing a deterioration state of the in-vehicle battery.

In addition, in Patent Literature 2, it is disclosed that a lease fee for a selected style is set in consideration of characteristics of each of an EV and an in-vehicle battery.

Citation List

Patent Literature

[PTL 1] JP 2021-48663 A
[PTL 2] JP 2019-95988 A

Summary of Invention

Technical Problem

However, in Patent Literature 1, reuse of an in-vehicle battery is disclosed, and reuse of a vehicle is not disclosed therein.

Thus, it is not assumed to efficiently reuse a returned vehicle when the vehicle is returned after a contract period with a user has ended.

In particular, in a related-art vehicle lending service, it has not been determined which type of reuse is to be set for the returned vehicle (for example, whether the returned vehicle is to be re-lent out as a lease vehicle or as a share car).

Selection of a lease style as disclosed in Patent Literature 2 is selection of a lease style in which only a vehicle is to be leased, only an in-vehicle battery is to be leased, or a pair of a vehicle and an in-vehicle battery is to be leased, and is not intended to select a lending type at a time of reusing the returned vehicle.

As described above, the lending type has not been determined for the returned vehicle in the related-art vehicle lending service, but there has been a demand for efficient reuse of the returned vehicle for a business purpose, and hence there has been a demand for efficient determination of the lending type based on an appropriate determination criterion.

Solution to Problem

In view of the above-mentioned problem, according to one aspect of the present invention, there is provided an information processing device for enabling determination of a lending type for a vehicle returned from a user in a vehicle lending service for lending out a vehicle to the user, the information processing device including: first calculation means for enabling calculation of a first profit to be gained when the returned vehicle is lent out for a first vehicle lending service and a second profit to be gained when the returned vehicle is lent out for a second vehicle lending service, which has a different lending period from a lending period of the first vehicle lending service, based on information corresponding to a state value of a battery provided to the returned vehicle or, when the battery is replaced after the vehicle is returned, of the battery after the replacement; and determination means for determining the first vehicle lending service or the second vehicle lending service as the lending type for the returned vehicle based on the first profit and the second profit.

Further, according to another aspect of the present invention, there is provided a program for causing a computer to execute the steps of: calculating a first profit to be gained when a returned vehicle is lent out for a first vehicle lending service and a second profit to be gained when the returned vehicle is lent out for a second vehicle lending service, which has a different lending period from a lending period of the first vehicle lending service, based on information corresponding to a state value of a battery provided to the returned vehicle or, when the battery is replaced after the vehicle is returned, of the battery after the replacement; and determining the first vehicle lending service or the second vehicle lending service as a lending type for the returned vehicle based on the first profit and the second profit that have been calculated.

Further, according to another aspect of the present invention, there is provided an information processing method for enabling determination of a lending type for a vehicle returned from a user in a vehicle lending service for lending out a vehicle to the user, the information processing method including the steps of: calculating a first profit to be gained when the returned vehicle is lent out for a first vehicle lending service and a second profit to be gained when the returned vehicle is lent out for a second vehicle lending service, which has a different lending period from a lending period of the first vehicle lending service, based on information corresponding to a state value of a battery provided to the returned vehicle or, when the battery is replaced after the vehicle is returned, of the battery after the replacement; and determining the first vehicle lending service or the second vehicle lending service as the lending type for the returned vehicle based on the first profit and the second profit that have been calculated.

Advantageous Effects of Invention

According to the present invention, it is possible to conveniently determine the lending type at the time of reusing (re-lending) the vehicle such as an EV while improving the profits.

Brief Description of Drawings

FIG. 1 is a schematic diagram of an information processing system according to one embodiment of the present invention.

FIG. 2 is a hardware configuration diagram of a server.

FIG. 3 is a hardware configuration diagram of a business operator terminal.

FIG. 4 is a hardware configuration diagram of a vehicle.

FIG. 5 is a functional configuration diagram of the information processing system.

FIG. 6 is a graph for showing a relationship between an SOH and the number of cycles.

FIG. 7 is a table in which the upper row shows vehicle information on a vehicle having a vehicle ID of a001 and the lower row shows vehicle information on a vehicle having a vehicle ID of a002.

FIG. 8 shows tables of respective coefficients relating to a service coefficient k1, in which part (a) shows a table of a number-of-years-since-production coefficient k11, part (b) shows a table of a travel distance coefficient k12, part (c) shows a table of an accident coefficient k13, and part (d) shows a table of a number-of-orders coefficient k14.

FIG. 9 shows tables of respective coefficients relating to a subscription coefficient k2, in which part (a) shows a table of a number-of-years-since-production coefficient k21, part (b) shows a table of a travel distance coefficient k22, and part (c) shows a table of an accident coefficient k23.

FIG. 10 shows tables of respective coefficients relating to a share coefficient k3, in which part (a) shows a table for a number-of-years-since-production coefficient k31, part (b) shows a table for a travel distance coefficient k32, and part (c) is a table for an accident coefficient k33.

FIG. 11 is a lending type determination screen indicating a lending type determination result for the vehicle having the vehicle ID of a001.

FIG. 12 is a table for showing a breakdown of lending type determination for the vehicle having the vehicle ID of a001.

FIG. 13 is a lending type determination screen indicating a lending type determination result for the vehicle having the vehicle ID of a002.

FIG. 14 is a table for showing a breakdown of lending type determination for the vehicle having the vehicle ID of a002.

FIG. 15 is a sequence diagram for illustrating an information processing procedure.

Description of Embodiments

An information processing system 1 according to one embodiment of the present invention is described.

The information processing system 1 enables determination of a lending type for a vehicle 500 (hereinafter also referred to as "returned vehicle") returned from a user in a vehicle lending service in which a business operator lends out a vehicle 500 to the user.

Types of lending of a vehicle 500 include "lease," "subscription," "car share," and "rental."

Those types of lending differ from each other in a contract period (usage period), a payment scheme (payment method), a rate structure, and the like.

The "lease" has a medium-to-long-term contract period of from six months to ten years, and employs, as a payment scheme, a (flat-rate) scheme in which a user pays a fixed amount of money annually or monthly.

The "subscription" has a medium-to-long-term contract period substantially the same as that of the lease, and employs, as a payment scheme, a (flat-rate) scheme in which a user pays a fixed amount of money (for example, 35,000 yen per month) monthly.

The "rental" enables a short-term contract in units of hours, and employs, as a payment scheme, a (usage-based) scheme in which a user pays an amount of money corresponding to a usage time period after return of the vehicle 500.

The "car share" enables, in addition to the short-term contract, an ultra-short-term contract in units of, for example, 15 minutes, and employs, as a payment scheme, a (usage-based) scheme in which a user pays an amount of money corresponding to a usage time period after return of the vehicle 500. The usage-based amount of money is 350 yen per 15 minutes.

For the sake of convenience of description, it is assumed that the information processing system 1 according to this embodiment can provide two types of lending, namely, the subscription and the car share.

The business operator not only lends out the vehicle 500 but also performs maintenance such as replacement or repair of components.

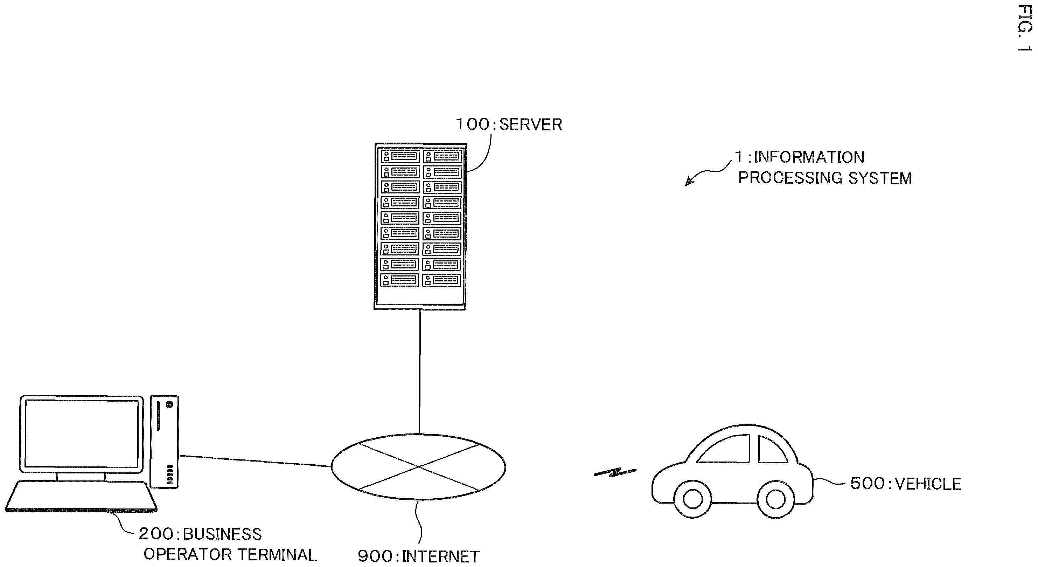

FIG. 1 is a schematic diagram of the information processing system 1 according to the present invention.

The information processing system 1 includes a server 100, a business operator terminal 200, and the vehicles 500, which are connected so as to enable communication therebetween through Internet 900.

The server 100 is an information processing device that is owned and managed by a management business operator that operates and manages a vehicle lending service.

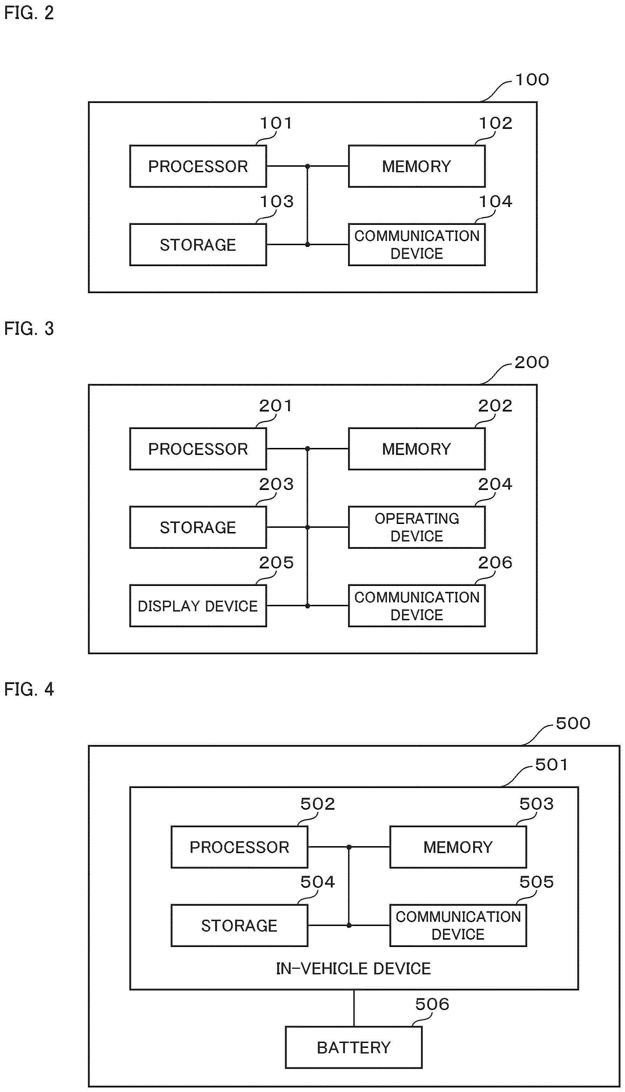

FIG. 2 is a hardware configuration diagram of the server 100.

The server 100 includes a processor 101, a memory 102, a storage 103, and a communication device 104.

The processor 101 executes programs, to thereby control respective components of the server 100 and perform processing for implementing functions of the server 100. As the processor 101, for example, a central processing unit (CPU) is used.

The memory 102 is a computer-readable recording medium, and stores programs to be executed by the processor 101. As the memory 102, for example, a random access memory (RAM) or a read only memory (ROM) is used.

The storage 103 is a computer-readable recording medium, and stores various kinds of data and programs to be used by the processor 101. As the storage 103, for example, a hard disk drive (HDD) or a solid state drive (SSD) is used.

The communication device 104 is connected to the Internet 900, and performs, for example, data communication to/from the business operator terminal 200 and the vehicles 500 through the Internet 900.

The business operator terminal 200 is an information terminal installed in a business establishment (for example, SS), and is an information terminal such as a personal computer, a tablet terminal, or a smartphone that is used by an employee or the like of the business establishment.

FIG. 3 is a hardware configuration diagram of the business operator terminal 200.

The business operator terminal 200 includes a processor 201, a memory 202, a storage 203, an operating device 204, a display device 205, and a communication device 206.

The processor 201 executes programs, to thereby control respective components of the business operator terminal 200 and perform processing for implementing functions of the business operator terminal 200. As the processor 201, for example, a CPU is used.

The memory 202 is a computer-readable recording medium, and stores programs to be executed by the processor 201. As the memory 202, for example, a RAM or a ROM is used.

The storage 203 is a computer-readable recording medium, and stores various kinds of data and programs to be used by the processor 201. As the storage 203, for example, a hard disk drive (HDD), a solid state drive (SSD), or a flash memory is used.

The operating device 204 is a device that is used for operating the business operator terminal 200. Examples of the operating device 204 include a keyboard and a mouse of a personal computer and a touch panel of a smartphone or a tablet terminal.

The display device 205 displays various screens. As the display device 205, for example, a liquid crystal display is used. The display device 205 may be configured as a touch panel integrally with a touch sensor.

The communication device 206 is connected to the Internet 900, and performs data communication to/from the server 100 through the Internet 900.

The vehicle 500 is traveling means to be lent out to a user, and an automobile such as an internal combustion engine vehicle or an electric vehicle (hereinafter also referred to as "EV") is adopted as the vehicle 500.

The internal combustion engine vehicle is enabled to travel by combusting a fuel such as gasoline and using a combustion gas resulting therefrom to drive an engine.

The EV includes a storage battery (hereinafter also referred to as "battery 506") such as a lithium ion battery, and is enabled to travel by driving a motor through use of electric power stored in the storage battery by charging.

In this embodiment, the vehicle 500 to be lent out is the EV.

Some EVs are called "micro EVs" having a size equivalent to that of a light vehicle.

Examples of the micro EV include those having a boarding capacity of four persons or less, a maximum speed of 60 km/h or lower, a rated output of 0.6 kW or more, a length of 2.5 m or less, a width of 1.3 m or less, a height of 2.0 m or less, and a maximum loading amount of 350 kg or less.

The battery 506 provided to the micro EV has a capacity of 9 kWh to 10 kWh (one-cell type) and a charging time of 5 hours to 16 hours, and achieves a cruising distance of about 100 km to about 150 km under a full charge state.

A state of the battery 506 of the EV is managed by an in-vehicle device 501.

The in-vehicle device 501 includes a processor 502, a memory 503, a storage 504, and a communication device 505.

The processor 502 executes programs, to thereby control respective components of the in-vehicle device 501 and perform processing for implementing functions of the in-vehicle device 501. As the processor 502, for example, a CPU is used.

The memory 503 is a computer-readable recording medium, and stores programs to be executed by the processor 502. As the memory 503, for example, a RAM or a ROM is used.

The storage 504 is a computer-readable recording medium, and stores various kinds of data and programs to be used by the processor 502. As the storage 504, for example, a hard disk drive (HDD), a solid state drive (SSD), or a flash memory is used.

The communication device 505 executes wireless communication to/from the server 100 in accordance with a predetermined wireless communication standard (for example, 4G, such as long-term evolution (LTE), or 5G).

The in-vehicle device 501 manages, as state values of the battery 506, a battery capacity, the number of times of charging and discharging (number of cycles), and the like.

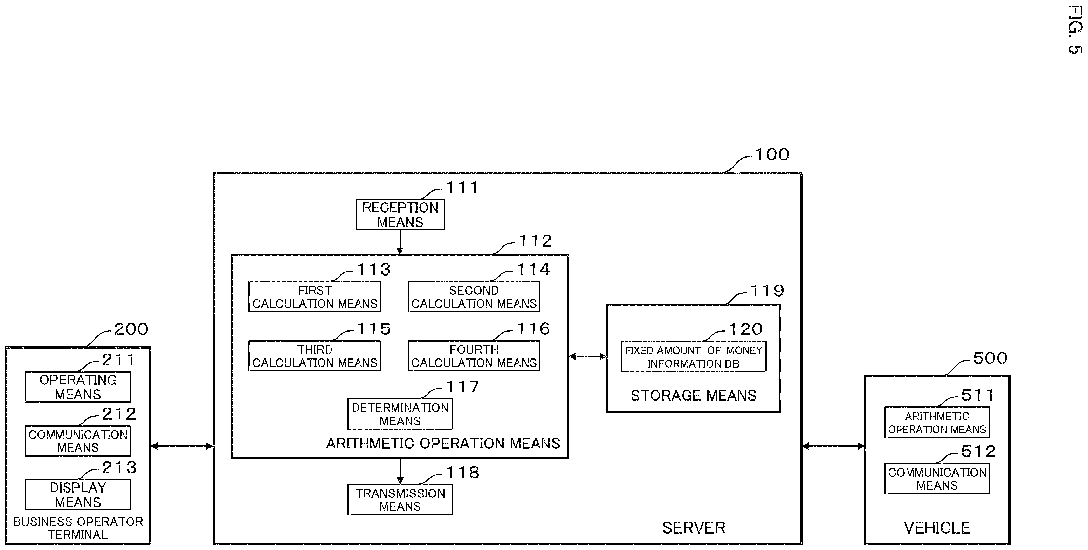

FIG. 5 is a functional configuration diagram of the information processing system 1.

(Business Operator Terminal)

The business operator terminal 200 is used for performing input of a state value relating to the returned vehicle, display of the lending type at a time of re-lending (reusing) the returned vehicle, and the like.

As illustrated in FIG. 5, the business operator terminal 200 includes operating means 211, communication means 212, and display means 213.

Functions of the business operator terminal 200 are implemented by the processor 201 executing a program, to thereby perform an arithmetic operation or control each component of the business operator terminal 200.

The operating means 211 executes various operations on the operating device 204.

Specifically, the operating means 211 inputs various kinds of information (vehicle information) indicating a state of the returned vehicle in response to an operation of the operating device 204 performed by the employee of the business operator.

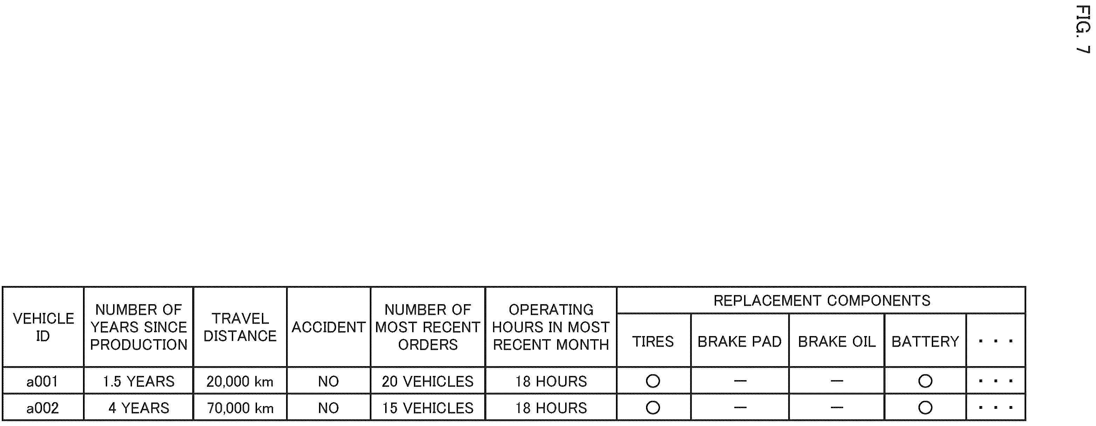

As illustrated in FIG. 7, the "vehicle information" is information in which the number of years since production, a travel distance, an accident, the number of most recent orders, an average operating rate for the most recent month, and information indicating replacement components are associated with each vehicle ID.

The upper row of FIG. 7 shows vehicle information at a time of returning the vehicle 500 having a vehicle ID of a001, and the lower row of FIG. 7 shows vehicle information at a time of returning the vehicle 500 having a vehicle ID of a002.

The "NUMBER OF YEARS SINCE PRODUCTION" is the number of years that have elapsed since a time of production of the vehicle 500.

The "TRAVEL DISTANCE" is a distance that has been traveled since the time of production of the vehicle 500.

The "ACCIDENT" is information indicating whether or not there has been an accident.

The "NUMBER OF MOST RECENT ORDERS" is the number of orders for lending out the vehicle 500 in the most recent one month before the time of returning.

The "NUMBER OF MOST RECENT ORDERS" is not limited to the number of orders in the most recent month, and may be, for example, the number of orders "per month" derived from the most recent "1 week" or "1 year."

The number of orders may be basically the number of lending of the same vehicle model as that of the returned vehicle, but may also be the number of sales of the vehicle model or may be the number of orders that combines the number of lending and the number of sales.

The "OPERATING HOURS IN MOST RECENT MONTH" is vehicle information on a share car, and is an operating time period of the vehicle 500 in the most recent month before the time of returning.

For example, the operating hours in the most recent month is obtained by calculating a total lending time period or a converted lending time period per month when the returned vehicle has been used as the share car.

When the in-vehicle device 501 has a function capable of outputting an operating time period or an operating rate, the "OPERATING HOURS IN MOST RECENT MONTH" based on a value output from the function may be calculated and transmitted from the vehicle 500 to the server 100.

It is also possible to use an average operating time period for the same vehicle model as that of the returned vehicle.

The "REPLACEMENT COMPONENTS" include, as subject components, tires, a brake pad, brake oil, and a (used) battery, and among those, only pieces of information on components (indicated by "o" in FIG. 7) that have been determined to be required to be replaced as a result of examining a state of each component by the employee or the like are handled as the replacement components.

The communication means 212 includes transmission means for transmitting information to the server 100 and reception means for receiving information from the server 100.

The information to be transmitted to the server 100 includes the vehicle information (FIG. 7) on the returned vehicle input through the operating means 211, and the information to be received from the server 100 includes lending type information.

The display means 213 displays various screens on the display device 205.

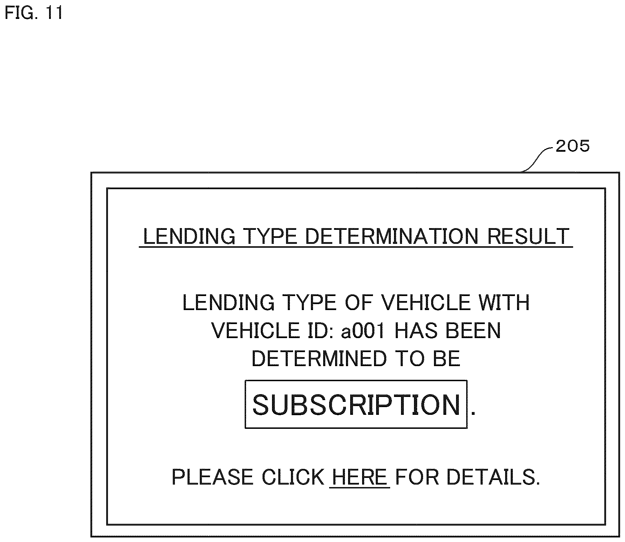

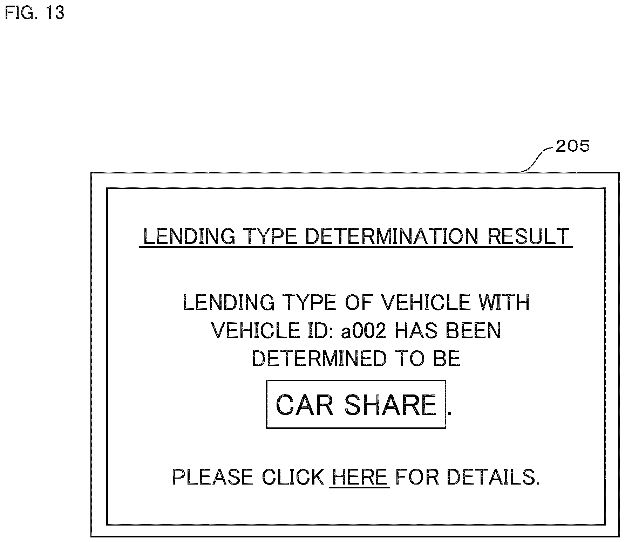

The display means 213 displays various operation screens (such as an input screen for the vehicle information), and displays a lending type determination screen (FIG. 11 and FIG. 13) and the like based on the lending type information received from the server 100.

(Vehicle)

The vehicle 500 is an EV, and can be lent out as a subscription vehicle or a share car.

As illustrated in FIG. 5, the vehicle 500 includes arithmetic operation means 511 and communication means 512.

Functions of the vehicle 500 (in-vehicle device 501) are implemented by the processor 502 executing a stored program, to thereby perform an arithmetic operation or control each component of the in-vehicle device 501.

For example, in response to a battery information request received from the server 100, the arithmetic operation means 511 causes the processor 502 to calculate battery information.

The battery information includes a state of health (SOH) and the number of cycles.

The SOH is also referred to as a capacity retention rate capable of indicating a deterioration state of the battery capacity, and can be calculated based on Equation (1).

$$\text{SOH (\%)}=(\text{current capacity})/(\text{initial capacity})\times100 \dots (1)$$

The arithmetic operation means 511 calculates a current SOH in response to a request received from the server 100, and stores a result of the calculation in the storage 504.

The number of cycles is the number of times of charging and discharging of the battery 506.

The arithmetic operation means 511 calculates the SOH as well as counts the number of cycles of the battery 506 up to a current time.

The calculated SOH and the counted number of cycles are stored in the storage 504 in association with each other.

In addition, the arithmetic operation means 511 periodically calculates the SOH as well as counts the number of cycles, and stores the SOH and the number of cycles in the storage 504 in association with each other each time the calculation and counting are performed.

That is, in response to the request received from the server 100, the storage 504 stores, as the battery information, data in which the current SOH and number of cycles are associated with each other and data in which previous SOHs and numbers of cycles are associated with each other.

The communication means 512 receives battery information request information from the server 100, and transmits the battery information stored in the storage 504 to the server 100.

(Server)

The server 100 determines, through an arithmetic operation, in which type (subscription vehicle or share car) the returned vehicle is to be lent out next.

As illustrated in FIG. 5, the server 100 includes reception means 111, arithmetic operation means 112, transmission means 118, and storage means 119.

In regard to functions of the server 100, the processor 101 executes a program stored in the memory 102 or the storage 103, to thereby perform an arithmetic operation or control each component of the server 100.

The reception means 111 receives the information transmitted from the business operator terminal 200 (communication means 212), and receives the information transmitted from the vehicle 500 (communication means 512).

The information received by the reception means 111 is output to the arithmetic operation means 112.

The information received by the reception means 111 includes the vehicle information (FIG. 7) transmitted from the business operator terminal 200 and the battery information transmitted from the returned vehicle 500.

The transmission means 118 transmits information to the business operator terminal 200 (communication means 212), and transmits information to the vehicle 500 (communication means 512).

The information to be transmitted by the transmission means 118 includes the lending type information to be transmitted to the business operator terminal 200 and the battery information request information to be transmitted to the vehicle 500.

The storage means 119 stores, in a fixed amount-of-money information DB 120, fixed amount-of-money information that does not vary.

The fixed amount-of-money information includes, for example, a subscription usage fee of 35,000 per month, a share usage fee of 350 yen/15 minutes, and replacement expenses for respective components (for example, 40,000 yen for tires, 200,000 yen for a (used) battery, 7,000 yen for a brake pad, and 5,000 yen for brake oil).

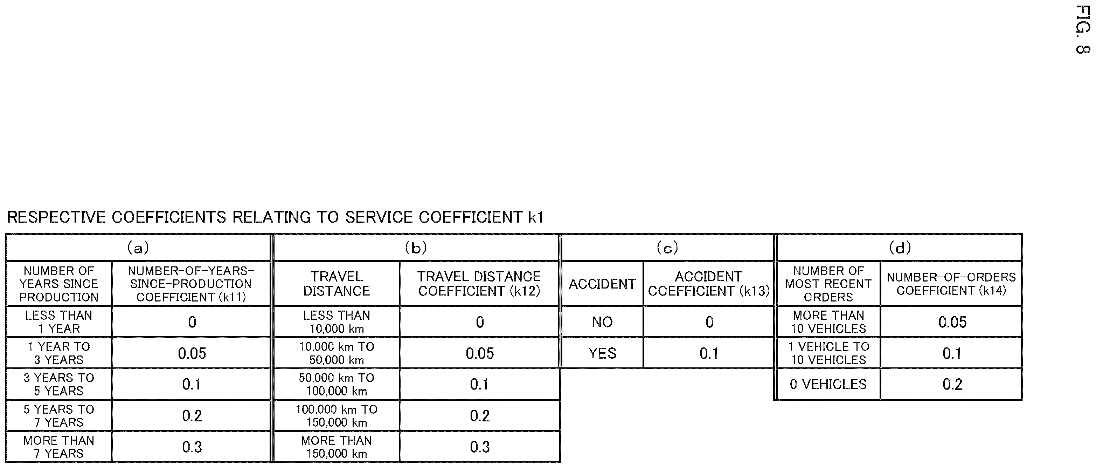

In addition, the storage means 119 stores tables of respective coefficients (k11 to k14) relating to a service coefficient k1, tables of respective coefficients (k21 to k23) relating to a subscription coefficient k2, and tables of respective coefficients (k31 to k33) relating to a share coefficient k3, which are described later (FIG. 8 to FIG. 10).

The arithmetic operation means 112 executes various kinds of arithmetic operation processing, and includes first calculation means 113, second calculation means 114, third calculation means 115, fourth calculation means 116, and determination means 117.

The first calculation means 113 calculates a profit (first profit; hereinafter also referred to as "subscription profit") expected when the returned vehicle 500 is lent out for subscription (first vehicle lending service) and a profit (second profit; hereinafter also referred to as "share profit") expected when the returned vehicle 500 is lent out for car share (second vehicle lending service) having a different lending period from that of the subscription (first vehicle lending service).

The subscription profit and the share profit are specifically calculated based on Equation (2) and Equation (3).

$$\text{(subscription profit)}=\text{(subscription revenue)}-\text{(subscription cost)} \dots (2)$$

$$\text{(share profit)}=\text{(share revenue)}-\text{(share cost)} \dots (3)$$

Then, the determination means 117 determines the subscription as the lending type of the returned vehicle when the subscription profit calculated by Equation (2) is larger than the share profit calculated by Equation (3), and conversely, determines the car share as the lending type of the returned vehicle when the share profit is larger than the subscription profit.

That is, the determination means 117 determines the subscription (first vehicle lending service) or the car share (second vehicle lending service) as the lending type for the returned vehicle 500 based on the subscription profit (first profit) and the share profit (second profit).

Methods of calculating the "subscription revenue," the "share revenue," the "subscription cost," and the "share cost" are described.

(Subscription Revenue)

The "subscription revenue" is a revenue (sales) that can be expected when the returned vehicle is lent out as a subscription vehicle.

The subscription revenue can be specifically calculated based on the subscription usage fee, the service coefficient k1, and a battery usable period.

The "subscription usage fee" is a usage fee for a subscription vehicle at a time at which the subscription vehicle is a new vehicle, and the "35,000 yen/month" stored in advance in the fixed amount-of-money information DB 120 is used.

The "service coefficient k1" is a coefficient for calculating the usage fee after refreshing the returned vehicle, and varies in a range of from 0 to 1.0 depending on a state of the vehicle 500.

The service coefficient k1 becomes smaller as the number of years since production becomes smaller, becomes smaller as the travel distance becomes smaller, becomes smaller without an accident, and becomes smaller as the number of most recent orders becomes larger.

The service coefficient k1 can be calculated by, for example, Equation (4).

k1=1-(number-of-years-since-production coefficient k11)-(travel distance coefficient k12)-(accident coefficient k13)-(number-of-orders coefficient k14)

The "number-of-years-since-production coefficient k11" is selected, for example, in a range of from 0 to 0.3 in proportion to the number of years since production as shown in part (a) of FIG. 8.

The "travel distance coefficient k12" is selected, for example, in a range of from 0 to 0.3 in proportion to the travel distance as shown in part (b) of FIG. 8.

The "accident coefficient k13" is selected to be 0 with the accident being "NO" and to be 0.1 with the accident being "YES" as shown in part (c) of FIG. 8.

The "number-of-orders coefficient k14" is selected in a range of from 0.05 to 0.2 in proportion to the number of most recent orders (number of times of being recently lent out) as illustrated in part (d) of FIG. 8.

As pieces of information (number of years since production, travel distance, whether or not there has been an accident, and number of most recent orders) required for calculating the service coefficient k1, those included in the vehicle information received from the business operator terminal 200 are used.

For example, as shown in an upper row of FIG. 7, the vehicle 500 having the vehicle ID of a001 has the number of years since production being 1.5 years, a travel distance of 20,000 km, the accident being "NO", and the number of most recent orders being 20 vehicles, and hence k1=1-0.05-0.05-0-0.05="0.85" is calculated with reference to the respective tables of part (a) to part (d) of FIG. 8.

Meanwhile, as shown in the lower row of FIG. 7, the vehicle 500 having the vehicle ID of a002 has the number of years since production being 4 years, a travel distance of 70,000 km, the accident being "NO", and the number of most recent orders being 15, and hence k1=1-0.1-0.1-0-0.05="0.75" is calculated with reference to the respective tables of part (a) to part (d) of FIG. 8.

When a result of the calculation of k1 becomes less than 0, it suffices that k1 is set to 0.

(Battery Usable Period)

The second calculation means 114 calculates a usable period of the battery 506 based on the SOH that is the state value of the battery 506.

That is, the second calculation means 114 calculates the battery usable period that is a remaining usable period from the current time until life of the battery 506 expires based on the SOH of the battery 506.

In the vehicle lending service in this embodiment, the battery 506 is used as it is after being subjected to refreshment (for example, replacement of an electrolyte or an electrode) when the SOH is equal to or larger than a prescribed reference value (75%).

That is, it is determined that the life of the battery 506 has expired when the SOH becomes 75%, and the remaining usage period until then is considered to be the battery usage period.

The reference value is not limited to 75%, and can be set to any value such as 80%.

When the SOH is less than the reference value, the battery 506 is replaced, but in this case, the battery usable period may be calculated based on the SOH of the battery 506 after the replacement.

For example, when the battery 506 is replaced by a (used) battery, the battery usable period may be calculated based on the SOH of the (used) battery.

When the battery 506 is replaced by a (new) battery, for the sake of convenience, it suffices to set a fixed period (for example, 5 years) as the battery usable period, and this case may be excluded from the scope of the present invention.

When the battery is replaced, the battery usable period may be considered to be preferred to be calculated based on the battery 506 after the replacement, but the present invention is intended to compare the subscription and the share to each other through use of the same battery 506. Therefore, a magnitude relationship in revenue does not change regardless of which one of the original battery 506 and the battery 506 after the replacement is used to perform comparison, and hence it suffices that any one thereof is used depending on convenience.

The battery 506 that is less than the reference value can also be used in another application (for example, use as a stationary storage battery or recycling).

For example, when the SOH is less than 75%, the battery can be reused as a stationary storage battery, and when the SOH is less than 50%, the battery can also be disassembled and recycled for each material.

In this manner, the determination means 117 can be executed when the SOH of the battery 506 provided to the returned vehicle 500 is covered by a threshold value (for example, 75% or more).

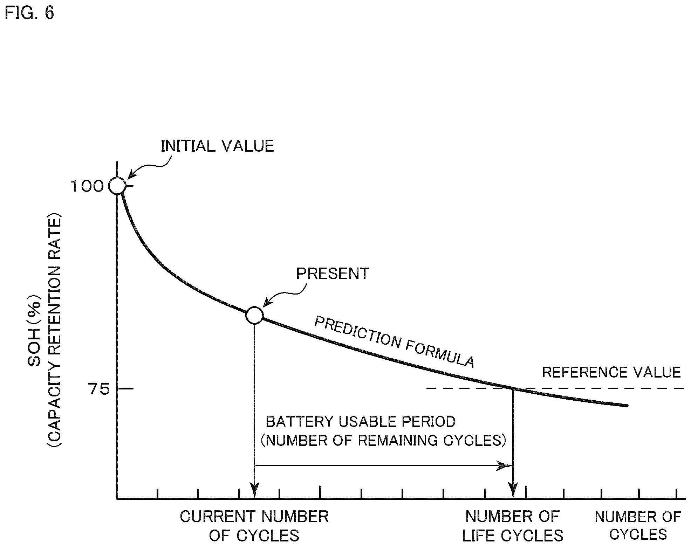

In this case, the SOH has a characteristic that gradually decreases in a curvilinear manner in accordance with an increase in the number of cycles as shown in FIG. 6, and hence it is possible to derive a prediction formula approximating the characteristic.

The prediction formula can be derived by fitting (X, Y)=(number of cycles, SOH) expressed by setting an X-axis as the number of cycles and a Y-axis as the SOH into, for example, an exponential approximation formula, a logarithmic approximation formula, or a power approximation formula.

For example, the prediction formula can be derived by inputting (X, Y) into publicly known software such as spreadsheet software.

In accordance with this prediction formula, when an SOH of 75% is substituted thereinto, the number of cycles (number of life cycles) until the SOH decreases to 75% can be calculated.

Then, the number of remaining cycles until the SOH decreases to 75% can be calculated by subtracting the number of cycles up to the current time (current number of cycles) from the number of life cycles.

According to a survey, it has been found that, in terms of a charging frequency of an EV, 70% of people charge the EV 0 to 2 times per week, and most people charge the EV about 2 times per week.

Thus, the number of cycles for one month is calculated to be 8 times (=(2 times)×(4 weeks)), and hence the number of months (estimated value) of the "battery usable period" can be calculated by dividing the number of remaining cycles by the number of cycles for one month (number of cycles per month).

In the information processing system 1 according to this embodiment, the server 100 performs connection to the vehicle 500 based on reception of a request from the business operator terminal 200, and generates a prediction formula based on the battery information (information including the SOH and the number of cycles) received from the vehicle 500.

Then, the server 100 obtains the number of life cycles based on the generated prediction formula, and calculates the battery usable period based on the number of remaining cycles obtained by subtracting the current number of cycles from the number of life cycles.

It is assumed that the battery usable period of the returned vehicle having the vehicle ID of a001 has been calculated to be "36 months" and the battery usable period of the returned vehicle having the vehicle ID of a002 has been calculated to be "60 months."

That is, in this example, it is assumed that, as described later, the battery 506 mounted in the vehicle is replaced by another (used) battery, but the battery usable period has been calculated based on the state value of the battery 506 mounted in the vehicle.

The subscription revenue can be specifically calculated based on Equation (5).

$$(\text{subscription revenue})=(\text{subscription usage fee})\times(\text{service coefficient } k1)\times(\text{battery usable period}) \dots (5)$$

The subscription revenue of the vehicle 500 having the vehicle ID of a001 is calculated to be 1,071,000 yen (=(35,000 yen)×0.85×(36 months)).

The subscription revenue of the vehicle 500 having the vehicle ID of a002 is calculated to be 1,575,000 yen (=(35,000 yen)×0.75×(60 months)).

(Share Revenue)

The "share revenue" is a revenue (sales) that can be expected when the returned vehicle is lent out as a share car.

The share revenue can be specifically calculated based on the share usage fee and a battery usable period.

As the "share usage fee," "1,400 yen/hour" is used. The "1,400 yen/hour" is obtained by using "350 yen/15 minutes" stored in advance in the fixed amount-of-money information DB 120 and converting the "350 yen/15 minutes" into a usage fee per hour.

In this case, the server 100 uses the operating hours in the most recent month (operating time period in the most recent one month) received from the business operator terminal 200 to calculate a share usage fee per month.

The share usage fee per month is calculated to be 25,200 yen (=(1,400 yen/month)×(18 hours)) when the operating hours of the returned vehicle in the most recent month are 18 hours.

The share revenue can be specifically calculated based on Equation (6).

$$(\text{share revenue})=(\text{share usage fee})\times(\text{battery usable period}) \dots (6)$$

Thus, the share revenue of the vehicle 500 having the vehicle ID of a001 is calculated to be 907,200 yen (=(25,200 yen)$\times$ (36 months)).

The share revenue of the vehicle 500 having the vehicle ID of a002 is calculated to be 1,512,000 yen (=(25,200 yen)$\times$(60 months)).

(Subscription Cost)

The subscription cost corresponds to an expense (cost) required when the returned vehicle is reused as a subscription vehicle.

The subscription cost is calculated based on the replacement expenses of components and the subscription coefficient (first coefficient) k2.

The "replacement expenses of components" are an amount of money required for replacing the "REPLACEMENT COMPONENTS" included in the vehicle information received from the business operator terminal 200.

Forexample, as shown in FIG. 7, both the vehicle 500 having the vehicle ID of a001 and the vehicle 500 having the vehicle ID of a002 require replacement of tires, and require the battery 506 to be replaced by a battery.

Thus, when the replacement expenses (40,000 yen for tires and 200,000 yen for a (used) re-battery) are referred to in the fixed amount-of-money DB 120, a total replacement expense is calculated to be 240,000 yen.

The "subscription coefficient k2" is a coefficient for calculating a cost at a time of refreshing the returned vehicle, and is a state value as well as a variation value that varies in a range of from 0 to 1.0 depending on the state of the vehicle 500.

The subscription coefficient (first coefficient) k2 is set to a value larger than the share coefficient (second coefficient) k3.

This is because the usage period of the subscription is longer than that of the car share, and hence it is required to consider a risk of an increase in cost.

The subscription coefficient k2 is in common with the service coefficient k1 in that both become smaller as the number of years since production becomes smaller, become smaller as the travel distance becomes smaller, and become smaller without an accident. However, the subscription coefficient k2 does not vary in proportion to the number of most recent orders, and is therefore not provided with a number-of-most-recent-orders coefficient. This is because the number of orders relates to an expected revenue but does not relate to the cost.

The subscription coefficient k2 can be calculated by, for example, Equation (7).

$$k2=1-(\text{number-of-years-since-production coefficient } k21)-(\text{travel distance coefficient } k22)-(\text{accident coefficient } k23) \tag{7}$$

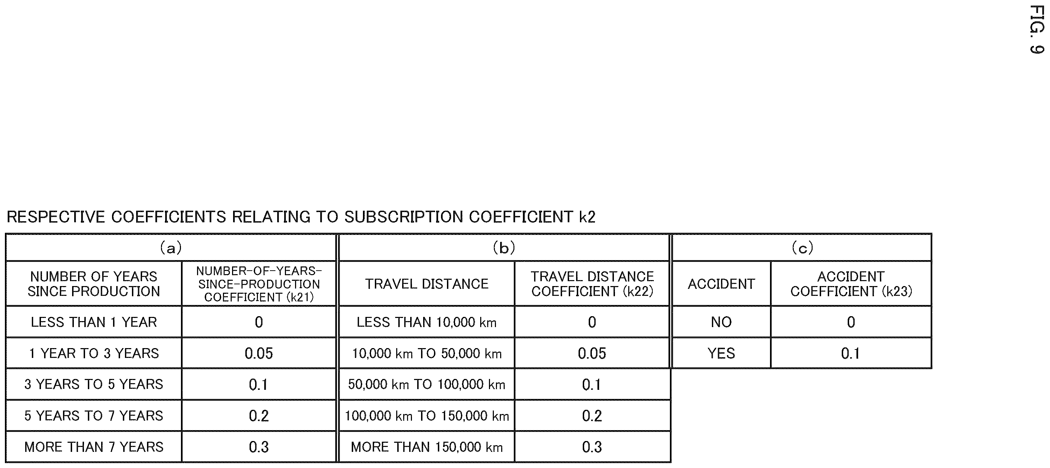

The "number-of-years-since-production coefficient k21" is selected, for example, in a range of from 0 to 0.3 in proportion to the number of years since production as shown in part (a) of FIG. 9.

The "travel distance coefficient k22" is selected, for example, in a range of from 0 to 0.3 in proportion to the travel distance as shown in part (b) of FIG. 9.

The "accident coefficient k23" is selected to be 0 with the accident being "NO" and to be 0.1 with the accident being "YES" as shown in part (c) of FIG. 9.

As pieces of information (number of years since production, travel distance, and whether or not there has been an accident) required for calculating the subscription coefficient k2, those included in the vehicle information received from the business operator terminal 200 are used.

For example, as shown in the upper row of FIG. 7, the vehicle 500 having the vehicle ID of a001 has the number of years since production being 1.5 years, a travel distance of 20,000 km, and the accident being "NO", and hence k2=1-0.05-0.05-0="0.9" is calculated with reference to the respective tables of part (a) to part (c) of FIG. 9.

Meanwhile, as shown in the lower row of FIG. 7, the vehicle 500 having the vehicle ID of a002 has the number of years since production being 4 years, a travel distance of 70,000 km, and the accident being "NO", and hence k2=1-0.1-0.1-0="0.8" is calculated with reference to the respective tables of part (a) to part (c) of FIG. 9.

When a result of the calculation of k2 becomes less than 0, it suffices that k2 is set to 0.

The subscription cost can be specifically calculated based on Equation (8).

$$(\text{subscription cost})=(\text{total replacement expense})\times(\text{subscription coefficient } k2) \dots (8)$$

The subscription cost of the vehicle 500 having the vehicle ID of a001 is calculated to be 216,000 yen (=(240,000 yen)×0.9).

The subscription cost of the vehicle 500 having the vehicle ID of a002 is calculated to be 192,000 yen (=(240,000 yen)×0.8).

(Share Cost)

The share cost corresponds to an expense (cost) required when the returned vehicle is reused as a share car.

The share cost is calculated based on the replacement expenses of components and the share coefficient (second coefficient) k3.

The "replacement expenses of components" are an amount of money required for replacing the "REPLACEMENT COMPONENTS" included in the vehicle information received from the business operator terminal 200.

For example, as shown in FIG. 7, both the vehicle 500 having the vehicle ID of a001 and the vehicle 500 having the vehicle ID of a002 require replacement of tires, and require the battery 506 to be replaced by a battery.

Thus, when the replacement expenses (40,000 yen for tires and 200,000 yen for a (used) battery) are referred to in the fixed amount-of-money DB 120, a total replacement expense is calculated to be 240,000 yen.

The "share coefficient k3" is a coefficient for calculating a cost at a time of refreshing the returned vehicle, and is a state value as well as a variation value in a range of from 0 to 1.0 depending on the state of the vehicle 500.

The share coefficient (second coefficient) k3 is set to a value smaller than the subscription coefficient (first coefficient) k2.

This is because the usage period of the car share is shorter than that of the subscription, and hence it is not required to consider a risk of an increase in cost.

The share coefficient k3 is in common with the service coefficient k1 and the subscription coefficient k2 in that both become smaller as the number of years since production becomes smaller, become smaller as the travel distance becomes smaller, and become smaller without an accident. However, the share coefficient k3 does not vary in proportion to the number of most recent orders, and therefore a number-of-most-recent-orders coefficient is not adopted therefor. This is because the number of orders is an index relating to an expected revenue but does not relate to the cost.

The share coefficient k3 can be calculated by, for example, Equation (9).

k3=1-(number-of-years-since-production coefficient k31)-(travel distance coefficient k32)-(accident coefficient k33)

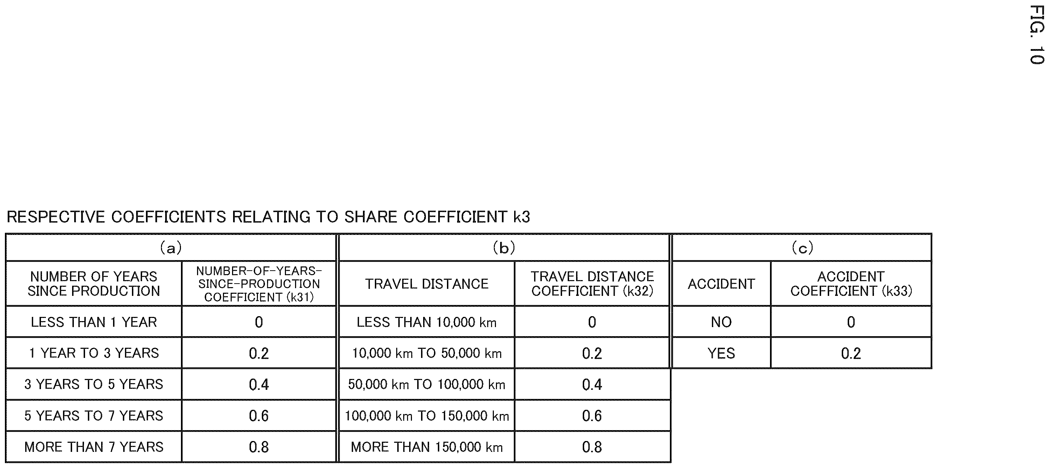

The "number-of-years-since-production coefficient k31" is selected, for example, in a range of from 0 to 0.8 in proportion to the number of years since production as shown in part (a) of FIG. 10. When part (a) of FIG. 9 and part (a) of FIG. 10 are compared to each other, it can be understood that a larger value is set for the number-of-years-since-production coefficient k31 than that for the number-of-years-since-production coefficient k21.

The "travel distance coefficient k32" is selected, for example, in a range of from 0 to 0.8 in proportion to the travel distance as shown in part (b) of FIG. 10. When part (b) of FIG. 9 and part (b) of FIG. 10 are compared to each other, it can be understood that a larger value is set for the travel distance coefficient k32 than that for the travel distance coefficient k22.

The "accident coefficient k33" is selected to be 0 with the accident being "NO" and to be 0.1 with the accident being "YES" as shown in part (c) of FIG. 10.

As pieces of information (number of years since production, travel distance, and whether or not there has been an accident) required for calculating the share coefficient k3, those included in the vehicle information received from the business operator terminal 200 are used.

For example, as shown in the upper row of FIG. 7, the vehicle 500 having the vehicle ID of a001 has the number of years since production being 1.5 years, a travel distance of 20,000 km, and the accident being "NO", and hence k3=1-0.2-0.2-0="0.6" is calculated with reference to the respective tables of part (a) to part (c) of FIG. 10.

Meanwhile, as shown in the lower row of FIG. 7, the vehicle 500 having the vehicle ID of a002 has the number of years since production being 4 years, a travel distance of 70,000 km, and the accident being "NO", and hence k3=1-0.4-0.4-0="0.2" is calculated with reference to the respective tables of part (a) to part (c) of FIG. 10.

When a result of the calculation of k3 becomes less than 0, it suffices that k3 is set to 0.

The share cost can be specifically calculated based on Equation (10).

(share cost)=(total replacement expense)×(subscription share k3) … (10)

The share cost of the vehicle 500 having the vehicle ID of a001 is calculated to be 144,000 yen (=(240,000 yen)×0.6).

The share cost of the vehicle 500 having the vehicle ID of a002 is calculated to be 48,000 yen (=(240,000 yen)×0.2).

(Determination of Lending Type of Vehicle 500 having Vehicle ID of a001)

The server 100 calculates the subscription profit and the share profit of the vehicle 500 having the vehicle ID of a001 based on Equation (2) and Equation (3).

$$\cdot \text{(subscription profit)}=(1,071,000 \text{ yen})-(216,000 \text{ yen})=(855,000 \text{ yen})$$

$$\cdot \text{(share profit)}=(907,200 \text{ yen})-(144,000 \text{ yen})=(763,200 \text{ yen})$$

The determination means 117 determines that the lending type at a time of reuse is "subscription" because the subscription profit is larger than the share profit.

The transmission means 118 of the server 100 transmits the lending type information indicating the determination result to the business operator terminal 200.

Thus, it is possible to cause the business operator terminal 200 (communication means 212) to receive the lending type information, and to cause the display means 213 to display the lending type information on the display device 205.

FIG. 11 is an example of a display screen (lending type determination screen) indicating that the lending type of the vehicle 500 having the vehicle ID of a001 has been determined to be subscription.

This enables the business operator to ascertain that it is preferred to lend out the vehicle 500 having the vehicle ID of a001 as a subscription vehicle when the vehicle 500 is reused.

The lending type determination screen has been generated so as to contain a predetermined portion (portion "HERE" of FIG. 11) that is clickable, and is set so as to display a breakdown of the lending type determination when this portion is clicked.

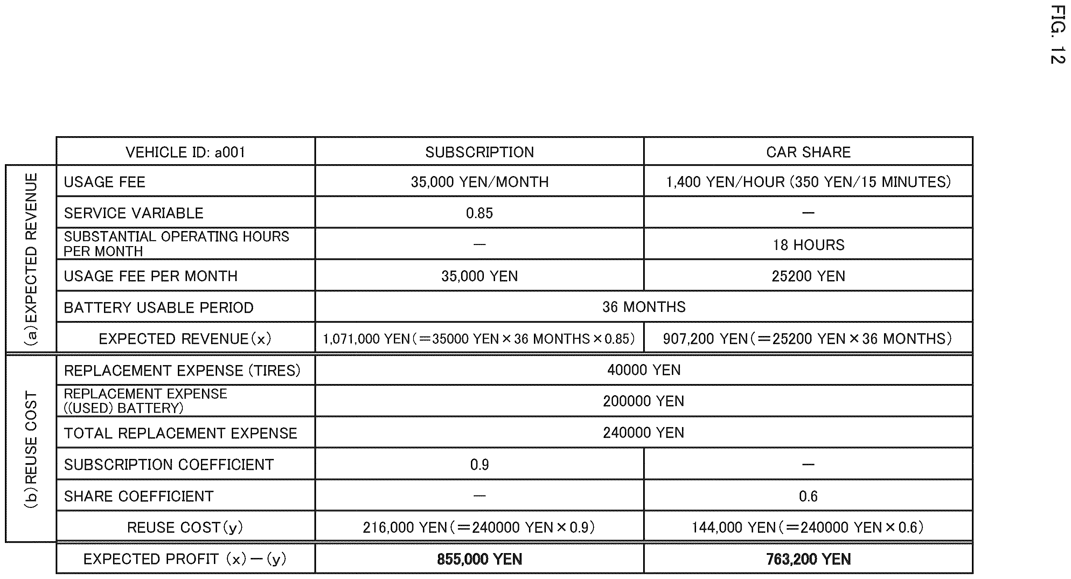

FIG. 12 is a table for showing the breakdown of the lending type determination for the vehicle 500 having the vehicle ID of a001.

This enables the business operator to examine the breakdown of the determination in detail, to notice that, for example, there is an error in the vehicle information input by the business operator, and to use the breakdown as a reference for re-inputting the vehicle information or actually determining the lending type.

The server 100 calculates the subscription profit and the share profit of the vehicle 500 having the vehicle ID of a002 based on Equation (2) and Equation (3).

$$\cdot \text{(subscription profit)}=(1,575,000 \text{ yen})-(192,000 \text{ yen})=(1,383,000 \text{ yen})$$

$$\cdot \text{(share profit)}=(1,512,000 \text{ yen})-(48,000 \text{ yen})=(1,464,000 \text{ yen})$$

The determination means 117 of the server 100 determines that the lending type at a time of reuse is "car share" because the subscription profit is smaller than the share profit.

FIG. 13 is an example of a display screen (lending type determination screen) indicating that the lending type of the vehicle 500 having the vehicle ID of a002 has been determined to be car share.

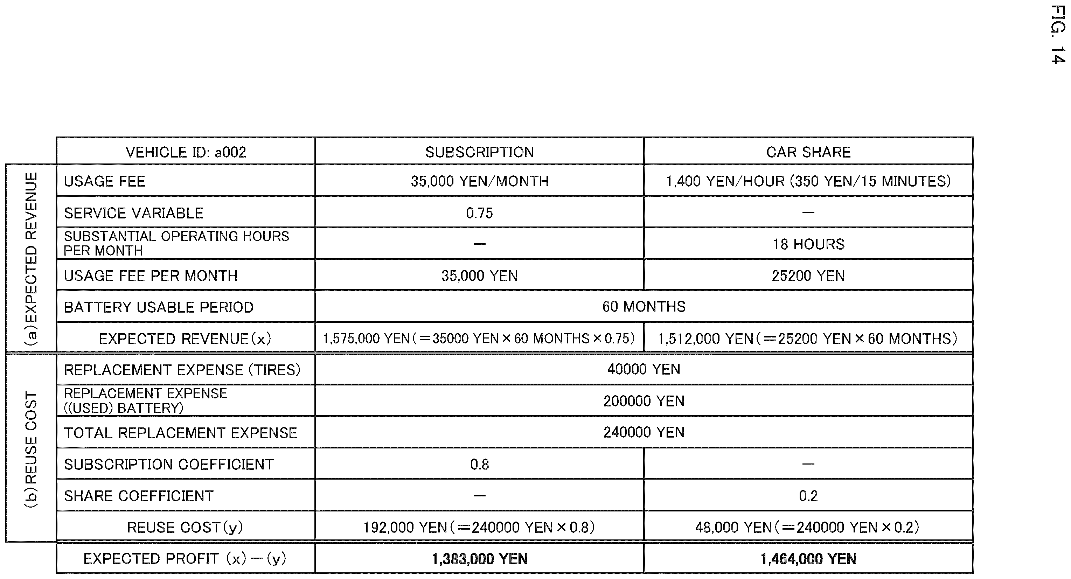

FIG. 14 is a table for showing the breakdown of the lending type determination for the vehicle 500 having the vehicle ID of a002.

When the subscription profit and the share profit are both negative, it may be determined that the vehicle 500 is not to be reused and the battery is to be separately reused (re-lent out or recycled).

In this manner, the server 100 causes the first calculation means 113 to obtain the revenues (subscription revenue and share revenue) based on the battery usable period calculated based on the SOH or the like of the battery 506 provided to the returned vehicle or, when the battery is replaced after the vehicle is returned, of the battery 506 after the replacement, and obtain the subscription profit and the share profit based on the information such as those revenues and expenses (subscription cost and share cost).

That is, the first calculation means 113 calculates the revenues based on the battery usable period derived by the SOH or the number of cycles, which are the state values of the battery 506, and calculates the subscription profit (first profit) and the share profit (second profit) based on the revenues and the expenses.

Further, the subscription (first vehicle lending service) is a vehicle lending service of a type having the lending period of the vehicle 500 longer than the lending period of the vehicle 500 for the car share (second vehicle lending service), and the first calculation means 113 calculates the subscription profit (first profit) based on the subscription cost and the subscription revenue, which have been calculated based on the subscription coefficient (first coefficient) that is a variation value, and calculates the share profit (second profit) based on the share cost and the share revenue, which have been calculated based on the share coefficient (second coefficient) smaller than the subscription coefficient (first coefficient).

Specifically, the information processing system 1 and the server 100 include the third calculation means 115 for calculating the subscription revenue (first revenue) and the share revenue (second revenue) and the fourth calculation means 116 for calculating the subscription cost (first expense) and the share cost (second expense), and the first calculation means 113 calculates the subscription profit (first profit) based on the subscription revenue (first revenue) and the subscription cost (first expense), and calculates the share profit (second profit) based on the share revenue (second revenue) and the share cost (second expense).

(Information Processing Procedure)

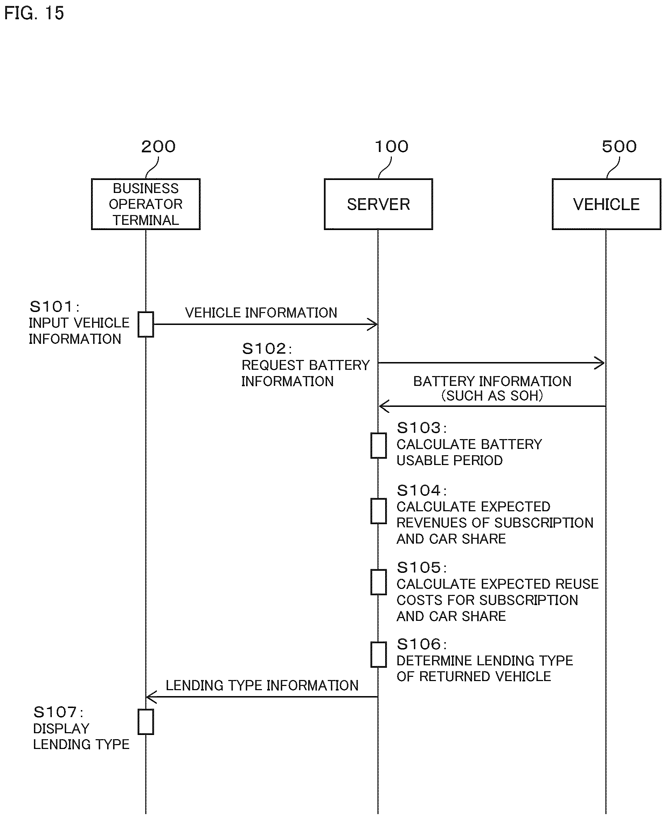

An information processing procedure in the present invention is described with reference to FIG. 15.

FIG. 15 is a sequence diagram for illustrating a procedure (steps) in a program operation and an information processing method according to the present invention.

It is assumed that the server 100 stores in advance the fixed amount-of-money information DB 120 (subscription usage fee of 35,000 per month, share usage fee of 350 yen/15 minutes, replacement expenses of the respective components (for example, 40,000 yen for tires, 200,000 yen for a (used) battery, 7,000 yen for a brake pad, and 5,000 yen for brake oil).

Processing performed after the vehicle 500 having the vehicle ID of a001 has been returned is described below as an example.

As illustrated in FIG. 15, first, through an operation of the business operator, the business operator terminal 200 executes input of the vehicle information on the vehicle 500 having the vehicle ID of a001 (Step S101).

Thus, the vehicle information shown in the upper row of FIG. 7 is transmitted from the business operator terminal 200 to the server 100.

When the server 100 receives the vehicle information from the business operator terminal 200, the server 100 executes a battery information request to the vehicle 500 (Step S102).

Thus, the server 100 transmits the battery information request information to the vehicle 500 identified by the vehicle ID of a001.

The vehicle 500 transmits the battery information to the server 100 in response to reception of the battery information request information.

Subsequently, the server 100 executes calculation of the battery usable period (Step S103).

Specifically, a prediction formula is generated based on a history of the SOH and the number of cycles that are included in the battery information received from the vehicle 500, the number of life cycles is obtained, the number of remaining cycles is calculated by subtracting the current number of cycles from the number of life cycles, and the battery usable period is calculated by dividing the number of remaining cycles by the operating hours in the most recent month.

Subsequently, the server 100 executes calculation of expected revenues of the subscription and the car share (Step S104).

That is, the subscription revenue and the share revenue are calculated.

The subscription revenue is calculated based on Equation (5), and the share revenue is calculated based on Equation (6).

As a result, the subscription revenue of the vehicle 500 having the vehicle ID of a001 is calculated to be 1,071,000 yen, and the share revenue is calculated to be 763,200 yen.

Subsequently, the server 100 executes calculation of reuse costs of the subscription and the car share (Step S105).

That is, the subscription cost and the share cost are calculated.

The subscription cost is calculated based on Equation (8), and the share cost is calculated based on Equation (10).

As a result, the subscription cost of the vehicle 500 having the vehicle ID of a001 is calculated to be 216,000 yen, and the share cost is calculated to be 144,000 yen.

The server 100 determines the lending type of the returned vehicle (Step S106).

Specifically, the subscription profit is calculated based on Equation (2), and the share profit is calculated based on Equation (3).

For the vehicle 500 having the vehicle ID of a001, the subscription profit (855,000 yen) is larger than the share profit (763,200 yen), and hence the lending type is determined to be the subscription.

The server 100 transmits the lending type information that is a result of the determination to the business operator terminal 200.

When the business operator terminal 200 receives the lending type information transmitted from the server 100, the display means 213 displays the lending type information on the display device 205 (FIG. 11).

In this manner, the program according to the present invention causes the program to execute the steps of: calculating the first profit (subscription profit) to be gained when the returned vehicle 500 is lent out for the first vehicle lending service (subscription) and the second profit (share profit) to be gained when the returned vehicle 500 is lent out for the second vehicle lending service (car share), which has a different lending period from that of the first vehicle lending service, based on the information (revenues and expenses) corresponding to the state value of the battery 506 provided to the returned vehicle 500 or, when the battery is replaced after the vehicle is returned, of the battery 506 after the replacement; and determining the first vehicle lending service (subscription) or the second vehicle lending service (car share) as the lending type for the returned vehicle 500 based on the first profit (subscription profit) and the second profit (share profit) that have been calculated.

Further, in the information processing method according to the present invention, the following steps are executed: calculating the first profit (subscription profit) to be gained when the returned vehicle 500 is lent out for the first vehicle lending service (subscription) and the second profit (share profit) to be gained when the returned vehicle 500 is lent out for the second vehicle lending service (car share), which has a different lending period from that of the first vehicle lending service, based on the information (revenues and expenses) corresponding to the state value of the battery 506 provided to the returned vehicle 500 or, when the battery is replaced after the vehicle is returned, of the battery 506 after the replacement; and determining the first vehicle lending service (subscription) or the second vehicle lending service (car share) as the lending type for the returned vehicle 500 based on the first profit (subscription profit) and the second profit (share profit) that have been calculated.

[Modification Examples]

Some of the components of the information processing system 1 described above can also be externally provided.

For example, some or all of the calculation means provided to the server 100 can be provided to an external device, and the server 100 can determine the lending type based on a calculation result obtained from the external device.

Specifically, the external device can be caused to calculate the subscription profit and the share profit and input the subscription profit and the share profit to the server 100 through a predetermined method (for example, communication processing such as wireless or wired communication processing or a method through intermediation of a USB flash drive or the like) to store the subscription profit and the share profit in a storage device (such as the storage 103), and the determination means 117 can also determine the lending type based on the subscription profit and the share profit that are stored in the storage device.

As an operation of the program, the program may cause a computer to execute the steps of: receiving the first profit (subscription profit) to be gained when the returned vehicle 500 is lent out for the first vehicle lending service (subscription) and the second profit (share profit) to be gained when the returned vehicle 500 is lent out for the second vehicle lending service (car share), which has a different lending period from that of the first vehicle lending service, and the information (revenues and expenses) based on the state value of the battery 506 provided to the returned vehicle 500 or, when the battery is replaced after the vehicle is returned, of the battery 506 after the replacement, and storing the information based on the state value of the battery 506 in the storage device (storage 103); and determining the first vehicle lending service (subscription) or the second vehicle lending service (car share) as the lending type for the returned vehicle 500 based on the first profit (subscription profit) and the second profit (share profit) that have been stored in the storage device.

As an information processing method, the information processing method may include the steps of: receiving the first profit (subscription profit) to be gained when the returned vehicle 500 is lent out for the first vehicle lending service (subscription) and the second profit (share profit) to be gained when the returned vehicle 500 is lent out for the second vehicle lending service (car share), which has a different lending period from that of the first vehicle lending service, and the information (revenues and expenses) based on the state value of the battery 506 provided to the returned vehicle 500 or, when the battery is replaced after the vehicle is returned, of the battery 506 after the replacement, and storing the information based on the state value of the battery 506 in the storage device (storage 103); and determining the first vehicle lending service (subscription) or the second vehicle lending service (car share) as the lending type for the returned vehicle 500 based on the first profit (subscription profit) and the second profit (share profit) that have been stored in the storage device (storage 103).

As described above, in the information processing system 1 according to this embodiment, the server 100 is an information processing device for enabling determination of the lending type for the vehicle 500 returned from the user in the vehicle lending service for lending out the vehicle 500 to the user, the information processing device including: the first calculation means 113 for enabling calculation of the first profit (subscription profit) to be gained when the returned vehicle is lent out for the first vehicle lending service (subscription) and the second profit (share profit) to be gained when the returned vehicle is lent out for the second vehicle lending service (car share), which has a different lending period from that of the first vehicle lending service, based on information (revenue and expense) corresponding to the state value of the battery 506 provided to the returned vehicle 500 or, when the battery is replaced after the vehicle is returned, of the battery 506 after the replacement; and the determination means 117 for determining the first vehicle lending service (subscription) or the second vehicle lending service (car share) as the lending type for the returned vehicle 500 based on the first profit (subscription profit) and the second profit (share profit).

According to the above-mentioned configuration, it is possible to easily determine the lending type as the reuse of the vehicle 500 based on the state of the battery 506.

Further, the first calculation means 113 calculates the first profit (subscription profit) based on the information (expense (subscription cost) and revenue (subscription revenue)) corresponding to the first coefficient (subscription coefficient) that is a variation value, and calculates the second profit based on the information (expense (share cost) and revenue (share revenue)) corresponding to the second coefficient (share coefficient) smaller than the first coefficient.

In this manner, the lending type is determined by calculating the subscription cost and the share cost through use of the coefficients indicating the state of the vehicle 500 and calculating the subscription profit and the share profit through use of the subscription revenue and the share revenue as well as the subscription cost and the share cost, and hence it is possible to execute the determination of the lending type based on an appropriate criterion that comprehensively takes into consideration the state of the battery 506 and the state of the vehicle 500 at the time of returning.

Further, while the subscription coefficient and the share coefficient are directly used for calculating the subscription cost and the share cost, the share coefficient is set to have a value smaller than the subscription coefficient (that is, the subscription coefficient is set to have a value larger than the share coefficient), to thereby be able to avoid an increase in cost for the subscription involving long-term usage and a decrease in profits due to the increase.

More specifically, the server 100 includes the third calculation means 115 for calculating the subscription revenue (first revenue) at a time of lending out the returned vehicle 500 for the subscription (first vehicle lending service) and the share revenue (second revenue) at a time of lending out the returned vehicle 500 for the car share (second vehicle lending service) and the fourth calculation means 116 for calculating the subscription cost (first expense) at the time of lending out the returned vehicle 500 for the subscription (first vehicle lending service) and the share cost (second expense) at a time of lending out the returned vehicle 500 for the car share (second vehicle lending service), and the first calculation means 113 calculates the subscription profit (first profit) based on the subscription revenue (first revenue) and the subscription cost (first expense), and calculates the share profit (second profit) based on the share revenue (second revenue) and the share cost (second expense).

This enables the determination of the lending type that can contribute to the profits of the business.

That is, the present invention calculates the subscription profit and the share profit by subtracting reuse costs from expected revenues, and determines the lending type based on which of those is larger, and hence the business operator can execute the reuse of the EV while acquiring a relatively high profit.

The preferred embodiment of the present invention has been described above, but it should be understood that the present invention is not limited only to the embodiment described above and various modifications may be made within the scope of the present invention.

For example, in regard to the lending type, the description has been given of the vehicle lending service in which any one of the subscription and the car share can be selected, but it is also possible to select some or all of the lease, the subscription, the rental, and the car share.

The configuration of the information processing system 1 is not limited to that in the above-mentioned embodiment, and some or all of the components of one device may be provided to another device in the configuration.

Further, the procedure of the information processing method is not limited to the above-mentioned procedure, and a part of the procedure may be changed.

For example, some or all of the pieces of vehicle information may be managed by the vehicle 500 and output to the server 100 in response to the returning.

The battery information (except at the time of returning) may be periodically output to the server 100 to be managed by the server 100.

It is also possible to add, to the service coefficient, a coefficient indicating a degree of deterioration of an exterior and an interior of the vehicle 500.

In the above-mentioned embodiment, the tables to which the same values are assigned are used for the respective coefficients (k11 to k13) relating to the service coefficient k1 and the respective coefficients (k21 to k23) relating to the subscription coefficient k2, but some or all those values may be non-identical.

That is, the service coefficient k1 is the state value of the returned vehicle required for calculating the revenue, and the subscription coefficient k2 and the share coefficient k3 are the state values required for calculating the subscription cost as well.

In regard to the number of life cycles of the battery 506, a correlation between the SOH and the number of cycles can be inferred, and hence a large number of pieces of set data thereon may be learned to generate a predictive model.

Thus, the number of life cycles can be obtained by inputting a life SOH (75%) into the predictive model, and the battery usable period can be calculated based on the number of remaining cycles obtained based on the number of life cycles and the current number of cycles.

In addition, a characteristic of a combination of the SOH and the number of cycles has a correlation with an environmental temperature, and hence the environmental temperature can be added to each data set in addition to the SOH and the number of cycles.

In this case, it suffices to sequentially acquire a data set of the SOH, the number of cycles, and the temperature, and to cause those data sets to be learned to generate a predictive model that can output the number of life cycles.

To replace the in-vehicle battery by a (used) battery, it is also possible to store in advance the state value of the (used) battery in the storage 103 of the server 100 in consideration of a case of calculating the battery usable period based on the (used) battery.

Further, not only the EV but also another traveling means (for example, an electric motorcycle) using a battery as a drive source can be used as a subject to be lent out.

Further, not only the EV but also a general vehicle such as an internal combustion engine vehicle has a battery mounted thereon, and hence the general vehicle can be included in the subject to be lent out.

The subscription revenue and the share revenue may be calculated by including a membership fee in the usage fee.

The vehicle 500 that has been lent out is set as the subject, but even when a new vehicle or a used vehicle is lent out for the first time, the same criterion may be applied to determine the lending type.

Reference Signs List

1: information processing system, 100: server, 101: processor, 102: memory, 103: storage, 104: communication device, 111: reception means, 112: arithmetic operation means, 113: first calculation means, 114: second calculation means, 115: third calculation means, 116: fourth calculation means, 117: determination means, 118: transmission means, 119: storage means, 120: fixed amount-of-money information DB, 200: business operator terminal, 201: processor, 202: memory, 203: storage, 204: operating device, 205: display device, 206: communication device, 211: operating means, 212: communication means, 213: display means, 500: vehicle, 501: in-vehicle device, 502: processor, 503 memory, 504: storage, 505: communication device, battery: 506, 511: arithmetic operation means, 512: communication means, k1: service coefficient, k11: number-of-years-since-production coefficient, k12: travel distance coefficient, k13: accident coefficient, k14: number-of-orders coefficient, k2: subscription coefficient, k21: number-of-years-since-production coefficient, k22: travel distance coefficient, k23: accident coefficient, k3: share coefficient, k31: number-of-years-since-production coefficient, k32: travel distance coefficient, k33: accident coefficient

**Claims**

1. An information processing device for enabling determination of a lending type for a vehicle returned from a user in a vehicle lending service for lending out a vehicle to the user, the information processing device comprising:

    first calculation means for enabling calculation of a first profit to be gained when the returned vehicle is lent out for a first vehicle lending service and a second profit to be gained when the returned vehicle is lent out for a second vehicle lending service, which has a different lending period from a lending period of the first vehicle lending service, based on information corresponding to a state value of a battery provided to the returned vehicle or, when the battery is replaced after the vehicle is returned, of the battery after the replacement; and
    determination means for determining the first vehicle lending service or the second vehicle lending service as the lending type for the returned vehicle based on the first profit and the second profit.

2. The information processing device according to claim 1,

    wherein the state value of the battery is a state of health (SOH),
    wherein the information processing device further comprises second calculation means for calculating a usable period of the battery based on the SOH, and
wherein the first calculation means is configured to enable calculation of the first profit and the second profit based on information corresponding to the usable period of the battery.

3. The information processing device according to claim 1 or 2,

wherein the first vehicle lending service is a vehicle lending service of a type having the lending period of the vehicle longer than the lending period of the vehicle for the second vehicle lending service, and
wherein the first calculation means is configured to enable calculation of the first profit based on information corresponding to a first coefficient that is a variation value and calculation of the second profit based on information corresponding to a second coefficient smaller than the first coefficient.

4. The information processing device according to any one of claims 1 to 3, wherein the determination means is configured to be executed when a state of health (SOH) of the battery provided to the returned vehicle is covered by a threshold value.

5. The information processing device according to any one of claims 1 to 4,

wherein the information based on the state value of the battery includes a first revenue to be gained when the returned vehicle is lent out for the first vehicle lending service and a second revenue to be gained when the returned vehicle is lent out for the second vehicle lending service, with a first expense being used as an expense to be required when the returned vehicle is lent out for the first vehicle lending service and a second expense being used as an expense to be required when the returned vehicle is lent out for the second vehicle lending service,
wherein the information processing device further comprises:

third calculation means for calculating the first revenue and the second revenue; and
fourth calculation means for calculating the first expense and the second expense, and

wherein the first calculation means is configured to calculate the first profit based on the first revenue and the first expense, and calculate the second profit based on the second revenue and the second expense.

6. A program for causing a computer to execute the steps of:

calculating a first profit to be gained when a returned vehicle is lent out for a first vehicle lending service and a second profit to be gained when the returned vehicle is lent out for a second vehicle lending service, which has a different lending period from a lending period of the first vehicle lending service, based on information corresponding to a state value of a battery provided to the returned vehicle or, when the battery is replaced after the vehicle is returned, of the battery after the replacement; and
determining the first vehicle lending service or the second vehicle lending service as a lending type for the returned vehicle based on the first profit and the second profit that have been calculated.

7. A program for causing a computer to execute the steps of:

receiving a first profit to be gained when a returned vehicle is lent out for a first vehicle lending service and a second profit to be gained when the returned vehicle is lent out for a second vehicle lending service, which has a different lending period from a lending period of the first vehicle lending service, and information based on a state value of a battery provided to the returned vehicle or, when the battery is replaced after the vehicle is returned, of the battery after the replacement, and storing the information based on the state value of the battery in a storage device; and
determining the first vehicle lending service or the second vehicle lending service as a lending type for the returned vehicle based on the first profit and the second profit that have been stored in the storage device.

8. An information processing method for enabling determination of a lending type for a vehicle returned from a user in a vehicle lending service for lending out a vehicle to the user, the information processing method comprising the steps of:

calculating a first profit to be gained when the returned vehicle is lent out for a first vehicle lending service and a second profit to be gained when the returned vehicle is lent out for a second vehicle lending service, which has a different lending period from a lending period of the first vehicle lending service, based on information corresponding to a state value of a battery provided to the returned vehicle or, when the battery is replaced after the vehicle is returned, of the battery after the replacement; and

determining the first vehicle lending service or the second vehicle lending service as the lending type for the returned vehicle based on the first profit and the second profit that have been calculated.

9. An information processing method for enabling determination of a lending type for a vehicle returned from a user in a vehicle lending service for lending out a vehicle to the user, the information processing method comprising the steps of:

receiving a first profit to be gained when a returned vehicle is lent out for a first vehicle lending service and a second profit to be gained when the returned vehicle is lent out for a second vehicle lending service, which has a different lending period from a lending period of the first vehicle lending service, and information based on a state value of a battery provided to the returned vehicle or, when the battery is replaced after the vehicle is returned, of the battery after the replacement, and storing the information based on the state value of the battery in a storage device; and

determining the first vehicle lending service or the second vehicle lending service as the lending type forthe returned vehicle based on the first profit and the second profit that have been stored in the storage device.

FIG. 1

1:INFORMATION PROCESSING SYSTEM

500:VEHICLE

100:SERVER

900:INTERNET

200:BUSINESS OPERATOR TERMINAL

FIG. 2

100

101 PROCESSOR

102 MEMORY

103 STORAGE

104 COMMUNICATION DEVICE

FIG. 3

200

201 PROCESSOR

202 MEMORY

203 STORAGE

204 OPERATING DEVICE

205 DISPLAY DEVICE

206 COMMUNICATION DEVICE

FIG. 4

500

501

502 PROCESSOR

503 MEMORY

504 STORAGE

505 COMMUNICATION DEVICE

IN-VEHICLE DEVICE

506 BATTERY

FIG. 5

VEHICLE — 500
- ARITHMETIC OPERATION MEANS — 511
- COMMUNICATION MEANS — 512

SERVER — 100

STORAGE MEANS — 119
- FIXED AMOUNT-OF-MONEY INFORMATION DB — 120

RECEPTION MEANS — 111

ARITHMETIC OPERATION MEANS — 112
- FIRST CALCULATION MEANS — 113
- SECOND CALCULATION MEANS — 114
- THIRD CALCULATION MEANS — 115
- FOURTH CALCULATION MEANS — 116
- DETERMINATION MEANS — 117
- TRANSMISSION MEANS — 118

BUSINESS OPERATOR TERMINAL — 200
- OPERATING MEANS — 211
- COMMUNICATION MEANS — 212
- DISPLAY MEANS — 213

22

FIG. 6

INITIAL VALUE

100

SOH (%)
(CAPACITY RETENTION RATE)

PRESENT

PREDICTION FORMULA

REFERENCE VALUE

75

BATTERY USABLE PERIOD
(NUMBER OF REMAINING CYCLES)

CURRENT NUMBER
OF CYCLES

NUMBER OF
LIFE CYCLES

NUMBER OF
CYCLES

FIG. 7

EP 4 418 192 A1

| VEHICLE ID | NUMBER OF YEARS SINCE PRODUCTION | TRAVEL DISTANCE | ACCIDENT | NUMBER OF MOST RECENT ORDERS | OPERATING HOURS IN MOST RECENT MONTH | REPLACEMENT COMPONENTS | | | | |
|---|---|---|---|---|---|---|---|---|---|---|
| | | | | | | TIRES | BRAKE PAD | BRAKE OIL | BATTERY | · · · |
| a001 | 1.5 YEARS | 20,000 km | NO | 20 VEHICLES | 18 HOURS | ○ | — | — | ○ | · · · |
| a002 | 4 YEARS | 70,000 km | NO | 15 VEHICLES | 18 HOURS | ○ | — | — | ○ | · · · |

FIG. 8

EP 4 418 192 A1

RESPECTIVE COEFFICIENTS RELATING TO SERVICE COEFFICIENT k1

| (a) | | (b) | | (c) | | (d) | |
|---|---|---|---|---|---|---|---|
| NUMBER OF YEARS SINCE PRODUCTION | NUMBER-OF-YEARS-SINCE-PRODUCTION COEFFICIENT (k11) | TRAVEL DISTANCE | TRAVEL DISTANCE COEFFICIENT (k12) | ACCIDENT | ACCIDENT COEFFICIENT (k13) | NUMBER OF MOST RECENT ORDERS | NUMBER-OF-ORDERS COEFFICIENT (k14) |
| LESS THAN 1 YEAR | 0 | LESS THAN 10,000 km | 0 | NO | 0 | MORE THAN 10 VEHICLES | 0.05 |
| 1 YEAR TO 3 YEARS | 0.05 | 10,000 km TO 50,000 km | 0.05 | YES | 0.1 | 1 VEHICLE TO 10 VEHICLES | 0.1 |
| 3 YEARS TO 5 YEARS | 0.1 | 50,000 km TO 100,000 km | 0.1 | | | 0 VEHICLES | 0.2 |
| 5 YEARS TO 7 YEARS | 0.2 | 100,000 km TO 150,000 km | 0.2 | | | | |
| MORE THAN 7 YEARS | 0.3 | MORE THAN 150,000 km | 0.3 | | | | |

FIG. 9

RESPECTIVE COEFFICIENTS RELATING TO SUBSCRIPTION COEFFICIENT k2

| (a) | | (b) | | (c) | |
|---|---|---|---|---|---|
| NUMBER OF YEARS SINCE PRODUCTION | NUMBER-OF-YEARS-SINCE-PRODUCTION COEFFICIENT (k21) | TRAVEL DISTANCE | TRAVEL DISTANCE COEFFICIENT (k22) | ACCIDENT | ACCIDENT COEFFICIENT (k23) |
| LESS THAN 1 YEAR | 0 | LESS THAN 10,000 km | 0 | NO | 0 |
| 1 YEAR TO 3 YEARS | 0.05 | 10,000 km TO 50,000 km | 0.05 | YES | 0.1 |
| 3 YEARS TO 5 YEARS | 0.1 | 50,000 km TO 100,000 km | 0.1 | | |
| 5 YEARS TO 7 YEARS | 0.2 | 100,000 km TO 150,000 km | 0.2 | | |
| MORE THAN 7 YEARS | 0.3 | MORE THAN 150,000 km | 0.3 | | |

FIG. 10

EP 4 418 192 A1

RESPECTIVE COEFFICIENTS RELATING TO SHARE COEFFICIENT k3

| (a) | | (b) | | (c) | |
|---|---|---|---|---|---|
| NUMBER OF YEARS SINCE PRODUCTION | NUMBER-OF-YEARS-SINCE-PRODUCTION COEFFICIENT (k31) | TRAVEL DISTANCE | TRAVEL DISTANCE COEFFICIENT (k32) | ACCIDENT | ACCIDENT COEFFICIENT (k33) |
| LESS THAN 1 YEAR | 0 | LESS THAN 10,000 km | 0 | NO | 0 |
| 1 YEAR TO 3 YEARS | 0.2 | 10,000 km TO 50,000 km | 0.2 | YES | 0.2 |
| 3 YEARS TO 5 YEARS | 0.4 | 50,000 km TO 100,000 km | 0.4 | | |
| 5 YEARS TO 7 YEARS | 0.6 | 100,000 km TO 150,000 km | 0.6 | | |
| MORE THAN 7 YEARS | 0.8 | MORE THAN 150,000 km | 0.8 | | |

FIG. 11

205

LENDING TYPE DETERMINATION RESULT

LENDING TYPE OF VEHICLE WITH
VEHICLE ID: a001 HAS BEEN
DETERMINED TO BE

SUBSCRIPTION .

PLEASE CLICK HERE FOR DETAILS.

FIG. 12

| VEHICLE ID: a001 | | SUBSCRIPTION | CAR SHARE |
|---|---|---|---|
| (a) EXPECTED REVENUE | USAGE FEE | 35,000 YEN/MONTH | 1,400 YEN/HOUR (350 YEN/15 MINUTES) |
| | SERVICE VARIABLE | 0.85 | — |
| | SUBSTANTIAL OPERATING HOURS PER MONTH | — | 18 HOURS |
| | USAGE FEE PER MONTH | 35,000 YEN | 25200 YEN |
| | BATTERY USABLE PERIOD | 36 MONTHS | |
| | EXPECTED REVENUE (x) | 1,071,000 YEN (=35000 YEN × 36 MONTHS × 0.85) | 907,200 YEN (=25200 YEN × 36 MONTHS) |
| (b) REUSE COST | REPLACEMENT EXPENSE (TIRES) | 40000 YEN | |
| | REPLACEMENT EXPENSE ((USED) BATTERY) | 200000 YEN | |
| | TOTAL REPLACEMENT EXPENSE | 240000 YEN | |
| | SUBSCRIPTION COEFFICIENT | 0.9 | — |
| | SHARE COEFFICIENT | — | 0.6 |
| | REUSE COST (y) | 216,000 YEN (=240000 YEN × 0.9) | 144,000 YEN (=240000 YEN × 0.6) |
| | EXPECTED PROFIT (x) − (y) | **855,000 YEN** | **763,200 YEN** |

EP 4 418 192 A1

FIG. 13

205

LENDING TYPE DETERMINATION RESULT

LENDING TYPE OF VEHICLE WITH
VEHICLE ID: a002 HAS BEEN
DETERMINED TO BE

CAR SHARE .

PLEASE CLICK HERE FOR DETAILS.

FIG. 14

EP 4 418 192 A1

| VEHICLE ID: a002 | | SUBSCRIPTION | CAR SHARE |
|---|---|---|---|
| (a) EXPECTED REVENUE | USAGE FEE | 35,000 YEN/MONTH | 1,400 YEN/HOUR (350 YEN/15 MINUTES) |
| | SERVICE VARIABLE | 0.75 | — |
| | SUBSTANTIAL OPERATING HOURS PER MONTH | — | 18 HOURS |
| | USAGE FEE PER MONTH | 35,000 YEN | 25200 YEN |
| | BATTERY USABLE PERIOD | 60 MONTHS | |
| | EXPECTED REVENUE (x) | 1,575,000 YEN (=35000 YEN × 60 MONTHS × 0.75) | 1,512,000 YEN (=25200 YEN × 60 MONTHS) |
| (b) REUSE COST | REPLACEMENT EXPENSE (TIRES) | 40000 YEN | |
| | REPLACEMENT EXPENSE ((USED) BATTERY) | 200000 YEN | |
| | TOTAL REPLACEMENT EXPENSE | 240000 YEN | |
| | SUBSCRIPTION COEFFICIENT | 0.8 | — |
| | SHARE COEFFICIENT | — | 0.2 |
| | REUSE COST (y) | 192,000 YEN (=240000 YEN × 0.8) | 48,000 YEN (=240000 YEN × 0.2) |
| EXPECTED PROFIT (x) − (y) | | **1,383,000 YEN** | **1,464,000 YEN** |

FIG. 15

**200**
BUSINESS
OPERATOR
TERMINAL

**100**
SERVER

**500**
VEHICLE

S101:
INPUT VEHICLE
INFORMATION

VEHICLE INFORMATION

S102:
REQUEST BATTERY
INFORMATION

BATTERY INFORMATION
(SUCH AS SOH)

S103:
CALCULATE BATTERY
USABLE PERIOD

S104:
CALCULATE EXPECTED
REVENUES OF SUBSCRIPTION
AND CAR SHARE

S105:
CALCULATE EXPECTED REUSE
COSTS FOR SUBSCRIPTION
AND CAR SHARE

S106:
DETERMINE LENDING TYPE
OF RETURNED VEHICLE

LENDING TYPE INFORMATION

S107:
DISPLAY
LENDING TYPE

| | | |
|---|---|---|
| **INTERNATIONAL SEARCH REPORT** | International application No. | |
| | **PCT/JP2022/027365** | |

**A.  CLASSIFICATION OF SUBJECT MATTER**

*G06Q 30/06*(2012.01)i
FI:   G06Q30/06 350

According to International Patent Classification (IPC) or to both national classification and IPC

**B.  FIELDS SEARCHED**

Minimum documentation searched (classification system followed by classification symbols)

G06Q30/06

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| A | JP 2013-84199 A (NISSAN MOTOR CO LTD) 09 May 2013 (2013-05-09)<br>  entire text, all drawings<br>  (Family: none) | 1-9 |
| A | JP 55-116199 A (OMRON TATEISI ELECTRONICS CO) 06 September 1980 (1980-09-06)<br>  entire text, all drawings<br>  (Family: none) | 1-9 |
| A | JP 2015-141600 A (HITACHI SYSTEMS LTD) 03 August 2015 (2015-08-03)<br>  entire text, all drawings<br>  (Family: none) | 1-9 |

☐ Further documents are listed in the continuation of Box C.      ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 September 2022** | **13 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**EP 4 418 192 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021048663 A
- JP 2019095988 A